# EUROPÄISCHE PATENTSCHRIFT

(11) **EP 2 668 014 B1**
(45) Veröffentlichungstag und Bekanntmachung des Hinweises auf die Patenterteilung: **12.09.2018**
(21) Anmeldenummer: 11794688.9
(22) Anmeldetag: 05.12.2011
(51) Int. Cl.: B29C 45/16, B29C 45/06, B29C 45/04

(54) **SPRITZGIEßVERFAHREN UND SPRITZGIEßVORRICHTUNG**
INJECTION MOLDING METHOD AND INJECTION MOLDING DEVICE
PROCÉDÉ DE MOULAGE PAR INJECTION ET DISPOSITIF DE MOULAGE PAR INJECTION

(30) Priorität: 28.01.2011 DE 102011000397
(43) Veröffentlichungstag der Anmeldung: 04.12.2013
(73) Patentinhaber: WIRO Präzisions-Werkzeugbau GmbH & Co. KG, 57462 Olpe (DE)
(72) Erfinder: ROHLJE, Reiner, 57462 Olpe (DE)
(74) Vertreter: Beckmann, Jürgen
(86) Internationale Anmeldenummer: PCT/EP2011/071703
(87) Internationale Veröffentlichungsnummer: WO 2012/100870

(56) Entgegenhaltungen:
- EP-A1- 1 428 645
- WO-A2-2007/144759
- DE-A1-102006 016 200
- DE-A1-102009 014 454
- JP-A- 9 239 775
- JP-A- 2002 079 542
- JP-A- 2008 279 763
- US-A1- 2008 079 192

## Beschreibung

Die Erfindung betrifft ein Spritzgießverfahren und eine Spritzgießvorrichtung, mit denen Spritzgießprodukte hergestellt werden können.

Spritzgießvorrichtungen bestehen im Allgemeinen aus (mindestens) zwei Formteilen, die sich unter Ausbildung einer Kavität, in welche Spritzgut eingeführt werden kann, zusammenfügen lassen. Nach der Verfestigung des Spritzgutes werden die Formteile zur Öffnung der Kavität auseinander bewegt, wobei die Richtung dieser Bewegung nachfolgend als "Maschinenöffnungsrichtung" oder synonym "Formöffnungsrichtung" bezeichnet wird.

Aus der DE 196 50 854 C1 ist eine Spritzgießvorrichtung zur Herstellung von Produkten aus zwei verschiedenen Materialien bekannt. Diese enthält ein bewegliches Formteil und ein stationäres Formteil. Das vom stationären Formteil aus in einem ersten Spritzvorgang gespritzte Produktteil wird zusammen mit dem beweglichen Formteil zu einem weiteren Formbereich des stationären Formteils bewegt, wo eine zweite Kavität gebildet wird. In die zweiten Kavität wird dann vom stationären Formteil aus ein weiteres Spritzgut angespritzt.

Die US 2008/079192 A1 offenbart eine Spritzgießvorrichtung zur Herstellung von Spritzgießprodukten mit geschlossenen Hohlräumen. Dabei werden ein stationäres Formteil und ein bewegliches Formteil zunächst unter Ausbildung von zwei Kavitäten zusammengefügt, und die Kavitäten werden über einen ersten Spritzgutkanal im beweglichen Formteil gefüllt. Anschließend werden die Formteile in Formöffnungsrichtung auseinanderbewegt, und das bewegliche Formteil wird unter Mitnahme eines erzeugten Deckels so verschoben, dass der Deckel einem im stationären Formteil haftenden Körperteil gegenüberliegt. Die Spritzgießvorrichtung wird dann erneut geschlossen, und es wird ein Ring um die Nahtstelle der beiden Teile mit Spritzgut gefüllt. Dieses wird über einen zweiten Spritzgutkanal im beweglichen Formteil zugeführt.

Die JP 2008 279763 offenbart eine Spritzgießvorrichtung, bei eine erste Kavität zwischen zwei Formteilen über einen Spritzgutkanal in einem ersten Formteil gefüllt wird. Anschließend wird das zweite Formteil mit dem erzeugten Produktteil in Formöffnungsrichtung verschoben, dann wird das erste Formteil senkrecht zur Formöffnungsrichtung bewegt. Schließlich werden die Formteile unter Bildung einer zweiten Kavität wieder geschlossen, und Spritzgut wird über einen Kanal im ersten Formteil zugeführt.

Die JP 2002 079542 offenbart eine Spritzgießvorrichtung zur Erzeugung von speziellen Körpern, die zwei aneinandergrenzende Hohlräume enthalten, wobei ein Mittelstück des Körpers an einem horizontal und vertikal beweglichen Arm gebildet wird.

Vor diesem Hintergrund war es Aufgabe der vorliegenden Erfindung, Mittel zur flexibleren Herstellung von Spritzgießprodukten bereitzustellen, insbesondere von Produkten, die zwei, drei, oder noch mehr Komponenten enthalten.

Diese Aufgabe wird durch ein Spritzgießverfahren nach Anspruch 1 sowie eine Spritzgießvorrichtung nach Anspruch 2 gelöst. Vorteilhafte Ausgestaltungen sind in den Unteransprüchen enthalten.

Das Spritzgießverfahren gemäß der Erfindung dient zur Herstellung eines Produktes aus (mindestens) einem "Spritzgut" genannten Material, das sich im fließfähigen Zustand in eine Form gebende Kavität einbringen und dort verfestigen lässt. Insbesondere kann es sich bei dem Spritzgut um einen thermoplastischen Kunststoff und/oder ein bei Wärmezufuhr aushärtendes Material handeln. Das Spritzgießverfahren enthält die folgenden Schritte:
- Ein erstes Produktteil wird in der (ersten) Kavität gespritzt, welche zwischen einem ersten Paar von Formbereichen eines ersten Formteiles und eines zweiten Formteiles gebildet wird, wobei das erste Formteil und das zweite Formteil jeweils einen Spritzgutkanal enthalten.
- Das erste Formteil und das zweite Formteil werden in der Formöffnungsrichtung auseinander bewegt. Die Formöffnungsrichtung (oder "Maschinenöffnungsrichtung") ist dabei konstruktiv durch die Gestaltung der Formteile und ihrer Formbereiche vorgegeben. Weiterhin handelt es sich um eine relative Bewegung zwischen den Formteilen, d. h. in Bezug auf die Umgebung kann eines der Formteile während der Öffnung in Ruhe (stationär) bleiben. Ferner ist diese Bewegung in Formöffnungsrichtung typischerweise (zumindest annähernd) geradlinig.
- Das erste Formteil, welches voraussetzungsgemäß einen Spritzgutkanal enthalten soll, wird anschließend in einer anderen Richtung als der Formöffnungsrichtung bewegt. Diese Bewegung kann auf einer beliebigen (d. h. geraden und/oder gekrümmten) Bahn erfolgen, wobei sie jedoch zumindest teilweise eine gerade Bewegung sein soll. Der Spritzgutkanal dient der Zufuhr des fließfähigen Spritzgutes zu einem Formbereich und hält vorzugsweise das Spritzgut auch während der Bewegung der Formteile fließfähig. Synonym wird dieser Kanal auch als "Heißkanal" bezeichnet.
- Das erste Formteil wird anschließend mit dem zweiten Formteil oder einem dritten Formteil zusammengefügt, so dass ein zweites Paar von Formbereichen des ersten Formteiles und des zweiten bzw. dritten Formteiles eine zweite Kavität bildet, in welcher das hergestellte erste Produktteil zu liegen kommt. Typischerweise wird die zweite Kavität (u. a.) von einem Formbereich gebildet, welcher auch an der Bildung der ersten Kavität beteiligt war.
- In der vorgenannten zweiten Kavität wird ein zweites Produktteil an das erste Produktteil gespritzt. Hierbei kann insbesondere ein anderes Spritzgut als beim ersten Spritzvorgang zum Einsatz kommen. Weiterhin wird das Spritzgut beim zweiten Spritzvorgang über einen anderen Spritzgutkanal zugeführt als das Spritzgut beim ersten Spritzvorgang, und wobei einer dieser Spritzgutkanäle in einem Formteil mit einer Heizung und der andere Spritzgutkanal in einem Formteil mit einer Kühlung angeordnet ist.

Gemäß einem zweiten Aspekt betrifft die Erfindung eine Spritzgießvorrichtung, insbesondere eine Spritzgießvorrichtung, mit welcher das oben erläuterte Verfahren durchgeführt werden kann. Die Spritzgießvorrichtung enthält die folgenden Komponenten:
- Ein erstes Formteil mit einem Spritzgutkanal, durch welchen Spritzgut im fließfähigen Zustand gefördert werden kann und der vorzugsweise das Spritzgut auch während der Bewegung der Formteile fließfähig hält.
- Ein zweites Formteil. Das erste und das zweite Formteil sollen dabei in bekannter Weise jeweils (mindestens) einen Formbereich aufweisen, die zu einer Kavität zusammengefügt werden können. Weiterhin enthält das zweite Formteil ebenfalls einen Spritzgutkanal.
Die Spritzgießvorrichtung ist weiterhin dadurch gekennzeichnet, dass:
- das erste und das zweite Formteil in der zugehörigen Formöffnungsrichtung auseinander bewegt werden können, um die vorgenannten Kavität zu öffnen;
- das erste Formteil (operativ, d. h. im Zuge eines Spritzvorganges) in einer anderen Richtung als der Formöffnungsrichtung bewegt werden kann;
- im ersten Formteil eine Temperiereinheit zur Kontrolle der Temperatur des zugehörigen Spritzgutkanals mit einer Heizung und im zweiten Formteil eine Temperiereinheit zur Kontrolle der Temperatur des zugehörigen Spritzgutkanals mit einer Kühlung angeordnet ist oder umgekehrt.

Die beschriebenen Spritzgießverfahren und die Spritzgießvorrichtung sind durch den gemeinsamen Gedanken gekennzeichnet, dass ein erstes Formteil mit einem Spritzgutkanal in einer anderen Richtung als der üblichen Formöffnungsrichtung bewegt werden kann. Diese Möglichkeit erscheint auf den ersten Blick nachteilig zu sein, da die Bewegung eines Spritzgutkanals erwartungsgemäß zu Problemen bei der Zufuhr des unter (hohem) Druck stehenden Spritzgutes führen wird. Zudem erfordert ein Spritzgutkanal typischerweise eine aufwändige Kontrolle der dort herrschenden Bedingungen, beispielsweise der Temperatur. Auch im Hinblick hierauf ist es ungünstig, den Spritzgutkanal zu bewegen. Die vorliegende Erfindung beruht demgegenüber jedoch auf der Erkenntnis, dass durch die Anordnung eines Spritzgutkanals in einem Formteil, das sich in anderer Richtung als der Formöffnungsrichtung bewegen lässt, erhebliche Vorteile erzielen lassen. Diese Vorteile betreffen insbesondere das flexiblere Design der hergestellten Produkte, beispielsweise hinsichtlich der Lage der Angussstellen.

Aufgrund der engen Verwandtschaft der beschriebenen Spritzgießverfahren und Spritzgießvorrichtungen gelten Erläuterungen, die für einen dieser Gegenstände gegeben wurden, sinngemäß immer auch für die anderen.

Im Folgenden werden verschiedene bevorzugte Weiterbildungen der Erfindung beschrieben, welche sich sowohl bei den obigen Spritzgießverfahren als auch der Spritzgießvorrichtung verwirklichen lassen.

Wie bereits erläutert weist das erste Formteil der Spritzgießvorrichtung in der Regel einen ersten Formbereich und das zweite Formteil einen zweiten Formbereich auf, wobei diese Formbereiche im zusammengefügten Zustand der Formteile eine erste Kavität bilden, in welcher ein erstes Produktteil gespritzt werden kann.

Vorzugsweise ist darüber hinaus ein dritter Formbereich vorhanden, der mit dem ersten Formbereich des ersten Formteiles oder dem zweiten Formbereich des zweiten Formteiles im zusammengefügten Zustand eine zweite Kavität bilden kann, in welcher ein zweites Produktteil an ein erstes Produktteil gespritzt werden kann, wenn sich Letzteres vorgefertigt in der zweiten Kavität befindet. Mit einer derartigen Spritzgießvorrichtung lässt sich insbesondere ein Zwei-Komponenten (2K-) Produkt herstellen, wobei das erste Produktteil aus der ersten Komponente besteht und das zweite Produktteil aus der zweiten Komponente.

Das in der ersten Kavität hergestellte erste Produktteil kann im Prinzip auf beliebige Weise in die zweite Kavität eingebracht werden, beispielsweise über einen separaten Transportmechanismus. Vorzugsweise wird das in der ersten Kavität hergestellte erste Produktteil vom ersten Formteil bei dessen Bewegung mitgenommen. Alternativ kann das erste Produktteil nach seiner Herstellung auch im zweiten Formbereich (des zweiten Formteils) verbleiben, falls dieser anschließend an der Bildung der zweiten Kavität beteiligt ist.

Soweit oben auf einen "dritten Formbereich" Bezug genommen wurde, kann dieser optional am zweiten Formteil ausgebildet sein. Das heißt, dass an demselben (einstückigen) zweiten Formteil zwei verschiedene Formbereiche ausgebildet sind, die sich wahlweise mit dem ersten Formbereich des ersten Formteiles zur ersten Kavität oder zur zweiten Kavität zusammenfügen lassen.

Alternativ kann der "dritte Formbereich" auch am ersten Formteil ausgebildet sein. Das heißt, dass an demselben (einstückigen) ersten Formteil zwei verschiedene Formbereiche ausgebildet sind, die sich wahlweise mit dem zweiten Formbereich des zweiten Formteiles zur ersten Kavität oder zur zweiten Kavität zusammenfügen lassen.

Weiterhin kann der "dritte Formbereich" aber auch an einem separaten dritten Formteil ausgebildet sein.

Gemäß einer anderen Ausführungsform der Erfindung ist ein zusätzlicher Formbereich (neben dem bereits erwähnten ersten, zweiten, und dritten Formbereich) vorgesehen, welcher mit einem Formbereich des ersten Formteils, des zweiten Formteils, oder gegebenenfalls des dritten Formteils zusammengefügt werden kann. Auf diese Weise kann der Produktionsausstoß erhöht werden, da in einem Maschinenzyklus der genannte zusätzliche Formbereich parallel jeweils eine weitere Kavität bilden kann, in welcher ein Produkt(teil) gespritzt werden kann.

Der vorgenannte zusätzliche Formbereich kann beispielsweise am ersten Formteil vorgesehen sein. Während der erste Formbereich (des ersten Formteils) mit dem zweiten Formbereich (des zweiten Formteils) eine Kavität bildet, kann dann gleichzeitig auch der zusätzliche Formbereich (des ersten Formteils) mit dem dritten Formbereich (des zweiten oder dritten Formteils) eine Kavität bilden. Anschließend können die Rollen von erstem Formbereich und zusätzlichem Formbereich vertauscht werden. In jedem Zyklus kann auf diese Weise an jedem Formbereich ein Spritzvorgang stattfinden.

Gemäß einer anderen Weiterbildung der Erfindung ist mindestens ein zusätzliches Formteil (neben dem ersten, zweiten, und gegebenenfalls dritten Formteil) vorhanden, das den oben genannten zusätzlichen Formbereich trägt. Auf diese Weise lässt sich beispielsweise ein so genanntes Etagenwerkzeug realisieren, bei dem in einem Zyklus an dem ersten oder zweiten Formteil Spritzvorgänge in verschiedenen Öffnungsebenen gleichzeitig stattfinden können. Das zusätzliche Formteil kann beispielsweise analog zum ersten Formteil ausgebildet sein, d. h. einen Spritzgutkanal aufweisen und in einer Richtung bewegbar sein, die sich von der zugehörigen (d. h. auf den zusätzlichen Formbereich bezogenen) Formöffnungsrichtung unterscheidet.

Zwei Formbereiche, die miteinander eine Kavität bilden können, sind vorzugsweise jeweils mehrfach vorgesehen. Insbesondere können beide (mindestens) n·m-fach vorgesehen sein, wobei n und m natürliche Zahlen sind, von denen mindestens eine größer als Eins ist. Bei Anordnung dieser n·m Formbereiche in einem zueinander passenden Raster können dann parallel n·m Kavitäten gebildet werden, in denen sich n·m Produktteile gleichzeitig spritzen lassen. Der Ausstoß der Vorrichtung bzw. des Verfahrens lässt sich dementsprechend vervielfachen. Die Zahlen n und m können insbesondere eine Anordnung der Formbereiche in einem Raster mit n Zeilen und m Spalten beschreiben.

Es wurde bereits erläutert, dass die Bewegung des ersten Formteiles, welche in einer anderen Richtung als der Formöffnungsrichtung erfolgen soll, auch Teil einer ganz oder teilweise gekrümmten Bahn sein kann. Insbesondere kann es sich bei der vollständigen Bewegung um eine Rotation um eine vorgegebene Achse und/oder um eine spiralförmige Bewegung handeln, wobei mindestens eine Tangentialkomponente dieser Bewegung in einer anderen Richtung als der Formöffnungsrichtung liegen soll.

Um fließfähig zu bleiben, muss Spritzgut in einem Spritzgutkanal typischerweise unter definierten Bedingungen gefördert werden. Diesbezüglich kann in einem Formteil (dem ersten, zweiten, dritten und/oder einem weiteren) vorzugsweise eine Temperiereinheit vorgesehenen sein, mit welcher die Temperatur eines im Formteil befindlichen Spritzgutkanals während der Förderung von Spritzgut kontrolliert werden kann (d. h. gemäß einer vorgegebenen Sollvorgabe geregelt oder gesteuert wird).

Die Temperiereinheit kann optional eine Heizung umfassen, um ausreichend hohe Temperaturen eines beispielsweise thermoplastischen Spritzgutes sicherzustellen. Zusätzlich oder alternativ kann die Temperiereinheit auch eine Kühlung umfassen, um das Überschreiten einer bestimmten Temperatur im Spritzgut zu verhindern. Letzteres ist beispielsweise bei Materialien wie Silikon notwendig, welche im kühlen, flüssigen Zustand gefördert werden müssen und sich in der (typischerweise geheizten) Kavität unter Wärmeeinfluss verfestigen.

Vorteilhafterweise werden gegensätzlich wirkende Temperiereinheiten in verschiedenen Formteilen untergebracht, damit sie sich gegenseitig möglichst wenig beeinflussen. Insbesondere kann in einem Formteil (z. B. dem ersten) eine Temperiereinheit mit einer Heizung und in einem anderen Formteil (z. B. dem zweiten) eine Temperiereinheit mit einer Kühlung angeordnet sein.

Im Folgenden wird die Erfindung mit Hilfe der Figuren beispielhaft näher erläutert. Dabei zeigt:
Fig. 1 eine schematische Seitenansicht eines ersten Formteiles gemäß der vorliegende Erfindung;
Fig. 2 eine schematische Seitenansicht eines zweiten Formteiles gemäß der vorliegenden Erfindung, welches einen Spritzgutkanal für das Material des zweiten Produktteils aufweist;
Fig. 3 aufeinander folgende Schritte eines Spritzvorganges mit dem ersten Formteil von Fig. 1 und dem zweiten Formteil von Fig. 2;
Fig. 4 eine Abwandlung des zweiten Formteiles von Fig. 2, welche einen Spritzgutkanal für das Material des ersten Produktteils aufweist;
Fig. 5. aufeinander folgende Schritte eines Spritzvorganges mit dem ersten Formteil von Fig. 1 und dem zweiten Formteil von Fig. 4;
Fig. 6 eine Spritzgießvorrichtung analog zu Figur 3, bei welcher korrespondierende Formbereiche n·m-fach wiederholt sind;
Fig. 7 eine perspektivische Ansicht der Formteile von Figur 6;
Fig. 8 eine Spritzgießvorrichtung, welche durch Verdopplung des ersten Formteiles aus der Spritzgießvorrichtung von Fig. 6 entsteht;
Fig. 9 eine Spritzgießvorrichtung mit einem zweiten Formteil und einem separaten dritten Formteil;
Fig. 10 eine Spritzgießvorrichtung mit einem zusätzlichen Formteil zur Bildung eines Etagenwerkzeuges;
Fig. 11 eine Spritzgießvorrichtung in Form eines Etagenwerkzeuges zur Herstellung eines Mehrkomponenten Produktes;
Fig. 12 die Konstruktionszeichnung einer realen Spritzgießvorrichtung gemäß der vorliegenden Erfindung.

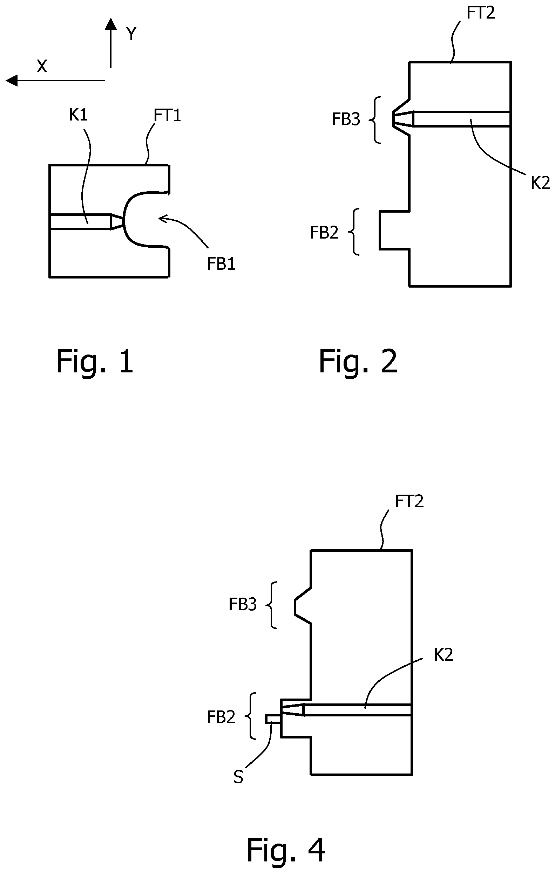

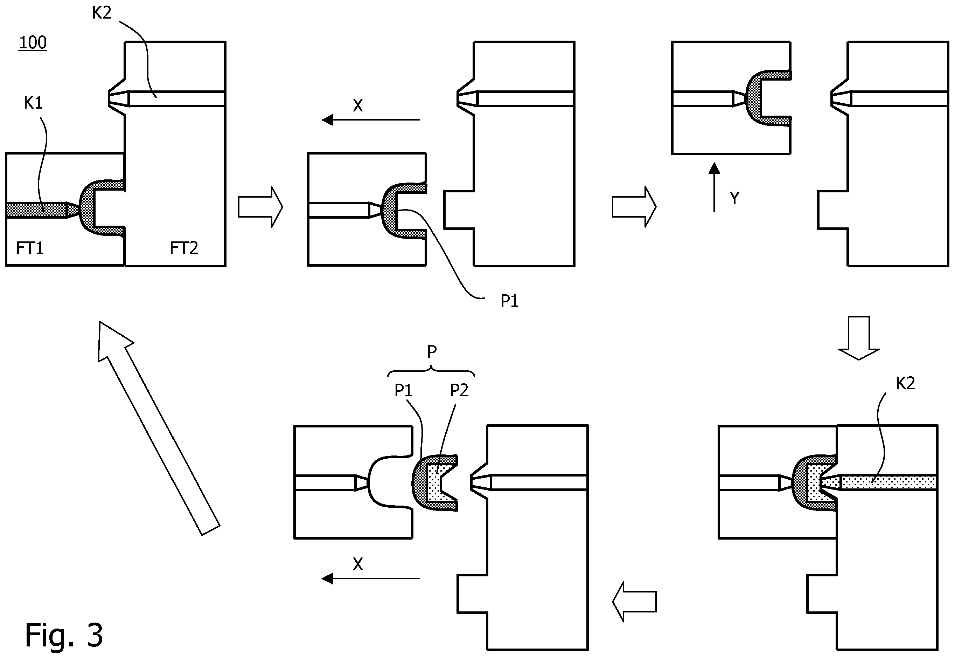

Figur 3 zeigt in einer schematischen Schnittansicht den Betrieb einer Spritzgießvorrichtung 100 gemäß einer ersten Ausführungsform der vorliegenden Erfindung. Die Spritzgießvorrichtung 100 besteht aus einem ersten Formteil FT1, welches in Figur 1 separat dargestellt ist, und einem zugehörigen zweiten Formteil FT2, welches in Figur 2 separat dargestellt ist.

Das erste Formteil FT1 hat einen ersten Formbereich FB1, zu dem ein erster Spritzgutkanal K1 führt. Das erste Formteil FT1 soll innerhalb der Spritzgießvorrichtung 100 beweglich gelagert sein, und zwar zumindest beweglich in einer Richtung Y, die sich von der Formöffnungsrichtung X (horizontal in Figur 3) unterscheidet.

Das zweite Formteil FT2 weist einen zweiten Formbereich FB2 und einen dritten Formbereich FB3 auf, welche alternativ mit dem ersten Formbereich FB1 des ersten Formteiles FT1 zu einer ersten bzw. zu einer zweiten Kavität zusammengefügt werden können. Im dargestellten Beispiel hat das zweite Formteil FT2 weiterhin einen Spritzgutkanal K2, welcher zum dritten Formbereich FB3 führt.

Figur 3 zeigt schematisch fünf aufeinander folgende Schritte der Herstellung eines 2-Komponenten Produktes P mit der Spritzgießvorrichtung 100. In Schritt 1 (oben links) wird ein erstes Produktteil P1 in der ersten Kavität zwischen dem ersten Paar der Formbereiche FB1 und FB2 der beiden Formteile FT1 und FT2 gespritzt, wobei das Spritzgut durch den Spritzgutkanal K1 des ersten Formteils FT1 zugeführt wird.

Dann wird die Form geöffnet (Schritt 2, oben Mitte), wozu das erste Formteil FT1 (und/oder das zweite Formteil FT2) in Formöffnungsrichtung X bewegt wird.

Wichtig ist dann der dritte Schritt (oben rechts), bei dem das erste Formteil FT1 (und/oder das zweite Formteil FT2) in einer Richtung Y senkrecht zur Formöffnungsrichtung X bewegt wird, um ein anderes Paar von Formbereichen FB1 und FB3 der Formteile FT1 und FT2 zur Deckung zu bringen. In der dann gebildeten zweiten Kavität zwischen diesen Formbereichen FB1 und FB3 wird dann das zweite Produktteil P2 an das in der Kavität befindliche erste Produktteil P1 gespritzt (4. Schritt, unten rechts). Hierbei wird das Spritzgut durch den Spritzgutkanal K2 im zweiten Formteil zugeführt.

Nach Entnahme des fertigen Produktes P in Schritt 5 (unten links) kann der Zyklus von vorne beginnen. Das erste Formteil FT1 wird somit bei dieser Ausführungsform der Erfindung linear in Y-Richtung hin und her bewegt. Alternativ könnte auch das zweite Formteil FT2 diese Bewegung oder einen Teil hiervon übernehmen.

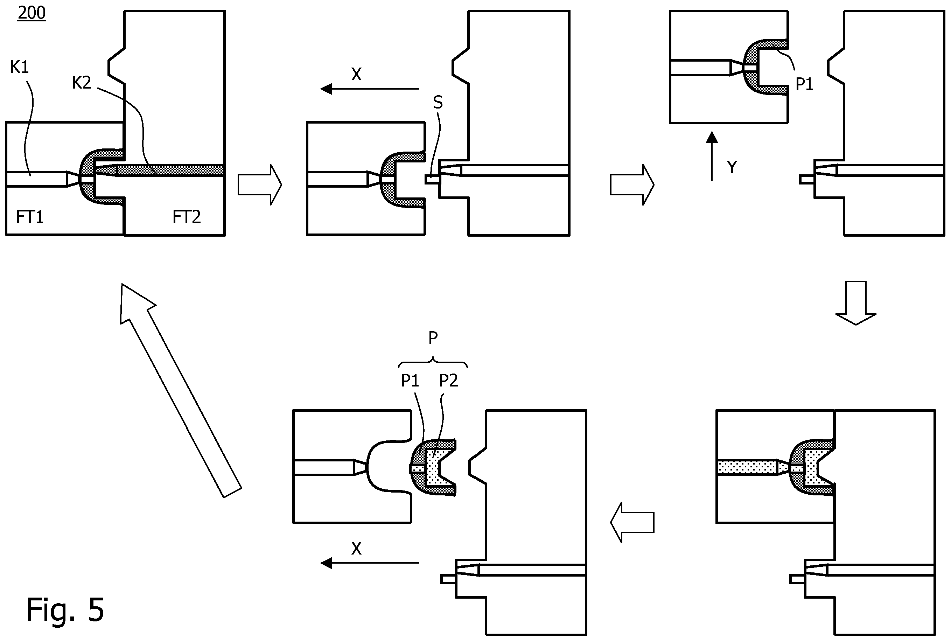

Figur 5 zeigt eine alternative Ausführungsform einer zweiten Spritzgießvorrichtung 200, welche aus dem ersten Formteil FT1 gemäß Figur 1 und einem zweiten Formteil FT2 gemäß Figur 4 gebildet wird. Das zweite Formteil FT2 von Figur 4 unterscheidet sich von demjenigen aus Figur 2 dadurch, dass sein Spritzgutkanal K2 zum zweiten Formbereich FB2 (statt zum dritten) führt. Weiterhin weist der zweite Formbereich FB2 einen Durchlass-Freihalter S auf, dessen Funktion aus der Verfahrensdarstellung von Figur 5 erkennbar wird.

Figur 5 zeigt schematisch fünf aufeinander folgende Schritte der Herstellung eines 2-Komponenten Produktes P mit der Spritzgießvorrichtung 200. In Schritt 1 (oben links) wird ein erstes Produktteil P1 in der ersten Kavität zwischen dem ersten Paar der Formbereiche FB1 und FB2 der beiden Formteile FT1 und FT2 gespritzt, wobei das Spritzgut durch den Spritzgutkanal K2 des zweiten Formteils FT2 zugeführt wird. Der Auslass des Spritzgutkanals K1 im ersten Formteil FT1 wird durch den Durchlass-Freihalter S abgedeckt.

Dann wird die Form geöffnet (Schritt 2, oben Mitte), wozu das erste Formteil FT1 (und/oder das zweite Formteil FT2) in Formöffnungsrichtung X bewegt wird. Aufgrund des Durchlass-Freihalters S ist im entstandenen ersten Produktteil P1 ein Durchlass von der Rückseite (d. h. dem Auslass des Spritzgutkanals K1) zur Vorderseite hin offen.

Im dritten Schritt (oben rechts) wird wieder das erste Formteil FT1 (und/oder das zweite Formteil FT2) in einer Richtung Y senkrecht zur Formöffnungsrichtung X bewegt, um die Formbereiche FB1 und FB3 der Formteile FT1 und FT2 zur Deckung zu bringen. In der dann gebildeten zweiten Kavität zwischen diesen Formbereichen FB1 und FB3 wird dann das zweite Produktteil P2 an das in der Kavität befindliche erste Produktteil P1 gespritzt (4. Schritt, unten rechts). Hierbei wird das Spritzgut durch den Spritzgutkanal K1 im ersten Formteil zugeführt, wobei es durch den frei gehaltenen Durchlass im ersten Produktteil P1 zu dessen Vorderseite gelangt.

Nach Entnahme des fertigen Produktes P in Schritt 5 (unten links) kann der Zyklus von vorne beginnen.

Selbstverständlich kann die Spritzgießvorrichtung 200 auf verschiedene Weisen abgewandelt werden. Beispielsweise könnte der Durchlass-Freihalter S auch am ersten Formteil FT1 ausgebildet sein.

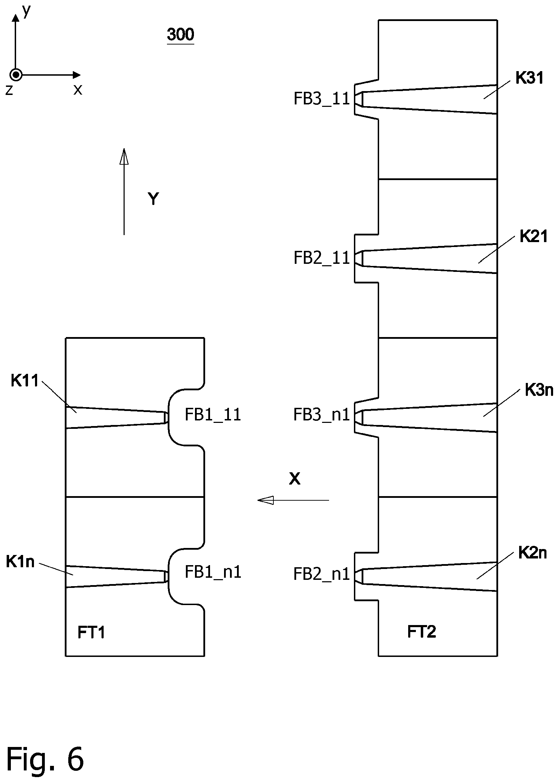

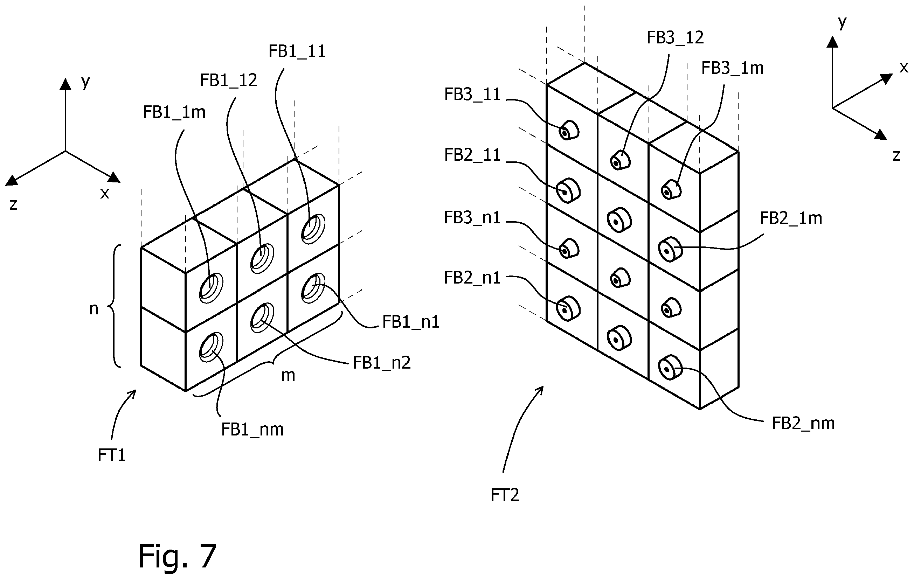

Die Figuren 6 und 7 zeigen eine Spritzgießvorrichtung 300, bei der das erste Formteil FT1 eine Anzahl von n·m (vorzugsweise identischen) Formbereichen FB1_11, ... FB1_nm enthält, wobei der Fall n = 2 und m = 3 dargestellt ist. Die Formbereiche sind in n übereinander liegenden Reihen (y-Richtung) und m nebeneinander liegenden Spalten (z-Richtung) angeordnet. Zu beachten ist, dass in Figur 7 die beiden Formteile FT1, FT2 zur besseren Erkennbarkeit gedreht dargestellt sind, d. h. im operativen Zustand sind sie zueinander parallel.

Ebenso enthält das zweite Formteil FT2 eine Anzahl von 2n·m Formbereichen FB2_11, ... FB2_nm, FB3_11, ... FB3_nm zweierlei Art, von denen jeweils die Hälfte mit den Formbereichen des ersten Formteils FT1 zur Deckung gebracht werden kann, wenn das erste Formteil sich in (±Y)-Richtung hin und her bewegt. Im dargestellten Beispiel ist jeweils eine sich in z-Richtung erstreckende Reihe von m identischen Formbereichen einer ersten Art (z. B. die oberste Reihe FB3_11, FB3_12, ... FB3_1m) abwechselnd mit einer Reihe von m identischen Formbereichen der zweiten Art angeordnet (z. B. zweitoberste Reihe der Formbereiche FB2_11,... FB2_1m). Eine solche alternierende und sich in z-Richtung m-fach wiederholende Anordnung hat den Vorteil, dass das erste Formteil FT1 in (±Y)-Richtung nur um eine Wegeinheit (d. h. Breite eines Formbereiches) bewegt werden braucht, um alle n·m Formbereiche des ersten Formteils FT1 mit korrespondierenden Formbereichen des zweiten Formteils FT2 zur Deckung zu bringen. Mit der Spritzgießvorrichtung 300 können in jedem Zyklus somit n·m Produktteile (P1 oder P2) hergestellt werden.

Die Figuren 6 und 7 veranschaulichen darüber hinaus eine weitere Option, bei der zu jedem der 2n·m Formbereiche im zweiten Formteil FT2 ein eigener Spritzgutkanal (K31, K21, K3n, K2n in Figur 6) führt. Auf diese Weise wird eine maximale Flexibilität bei der Herstellung von Produkten erreicht. Insbesondere können mit einer derartigen Vorrichtung ohne weiteres 3-Komponenten Produkte hergestellt werden. Alternativ könnten natürlich auch (ähnlich wie in den Figur 3 und 5) einige der Formbereiche im zweiten Formteil FT2 ohne eigenen Spritzgutkanal sein.

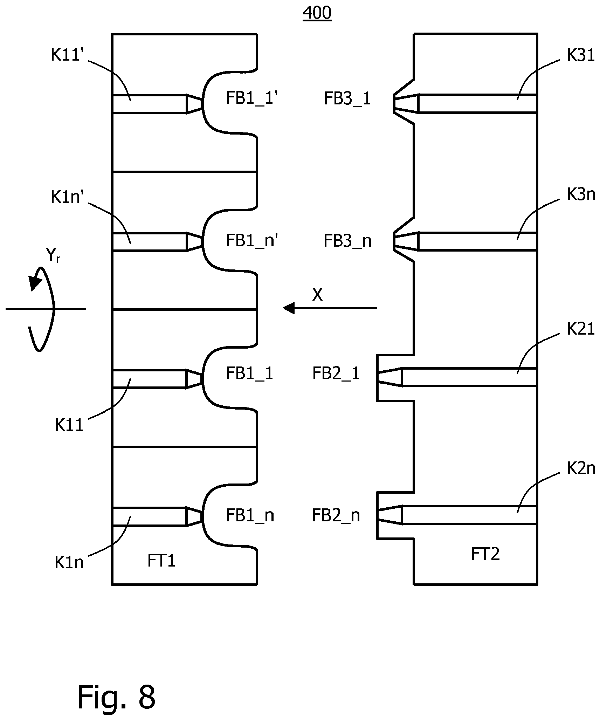

Figur 8 stellt eine Spritzgießvorrichtung 400 dar, bei der ebenfalls erste Formbereiche FB1_1, ... FB1_n, zweite Formbereiche FB2_1, ... FB2_n, und dritte Formbereiche FB3_1, ... FB3_n n-fach parallel übereinander vorgesehen sind. Darüber hinaus sind am ersten Formteil FT1 n zusätzliche Formbereiche FB1_1', ... FB1_n' vorhanden, die typischerweise identisch zu den ersten Formbereichen FB1_1, ... FB1_n sind.

Weiterhin kann bei dieser Ausführungsform das erste Formteil FT1 um eine Achse (die parallel zur Formöffnungsrichtung X liegt) in der Drehrichtung Yᵣ rotieren. Da alle Tangenten dieser Drehrichtung senkrecht zur Formöffnungsrichtung X liegen, kann vereinfachend davon gesprochen werden, dass die (gesamte) "Drehrichtung Yᵣ nicht in Formöffnungsrichtung X liegt".

Dadurch können am ersten Formteil FT1 und am zweiten Formteil FT2 gleich viele Formbereiche vorgesehen werden (nämlich 2n), und nach jedem Schließen dieser Spritzgießvorrichtung 400 erfolgen 2n Spritzvorgänge gleichzeitig. Mit anderen Worten werden alle vorhandenen Formbereiche in jedem Zyklus für eine Spritzvorgang genutzt. Mit der Spritzgießvorrichtung 400 können in jedem Zyklus somit n fertige Produkte (P) hergestellt werden.

Analog zur Ausführungsform von Figur 6 und 7 könnten die dargestellten Formbereiche optional auch in einer z-Richtung senkrecht zur Zeichenebenen m-fach identisch wiederholt sein. Dann ließen sich in jedem Zyklus n·m fertige Produkte (P) herstellen. Weiterhin könnte optional auch das zweite Formteil FT2 die Drehbewegung ganz oder teilweise ausführen.

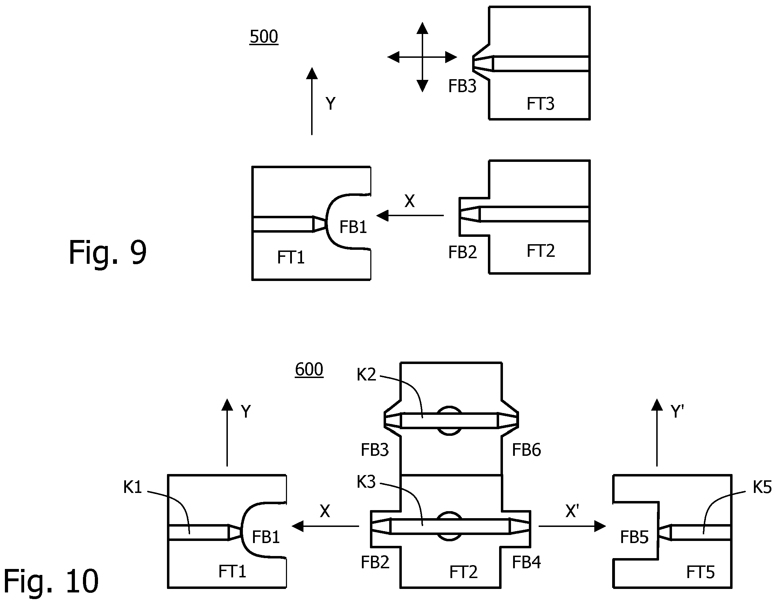

Figur 9 zeigt eine Spritzgießvorrichtung 500, welche eine Abwandlung der Vorrichtung 100 von Figur 3 darstellt. Im Unterschied zu Letzterer sind hier der zweite und dritte Formbereich FB2 und FB3 auf das zweite Formteil FT2 und ein drittes Formteil FT3 aufgeteilt. Diese beiden Formteile FT2 und FT3 sind vorzugsweise unabhängig voneinander beweglich, was die Flexibilität bei den durchführbaren Verfahrensabläufen entsprechend erhöht. Weiterhin sind für alle Formbereiche Spritzgutkanäle vorgesehen. Dadurch wird die Herstellung von Mehrkomponenten-Produkten möglich.

Figur 10 zeigt eine Spritzgießvorrichtung 600, welche als ein Etagenwerkzeug mit zwei Öffnungsebenen ausgebildet ist. Am zweiten Formteil FT2 ist hier neben dem zweiten Formbereich FB2 ein zusätzlicher zweiter Formbereich FB4 ausgebildet, welcher mit einem zusätzlichen Formteil FT5 eine (zusätzliche erste) Kavität bilden kann. Ebenso ist neben dem dritten Formbereich FB3 ein zusätzlicher dritter Formbereich FB6 ausgebildet, welcher mit dem zusätzlichen Formteil FT5 eine (zusätzliche zweite) Kavität bilden kann. Auf diese Weise können in einem Zyklus am Formteil FT2 gleichzeitig zwei (ggf. unterschiedliche) erste Produktteile bzw. zweite Produktteile hergestellt werden. Zu beachten ist, dass die aus den Formbereichen FB1 und FB2 bzw. FB5 und FB4 gebildeten Kavitäten jeweils individuelle Formöffnungsrichtungen X, X' haben, welche im dargestellten Beispiel antiparallel sind, im Allgemeinen aber beliebig zueinander liegen können.

Bei der Spritzgießvorrichtung 600 sind für alle Formbereiche FB2, FB3, FB4, FB6 des zweiten Formteiles FT2 Spritzgutkanäle vorgesehen.

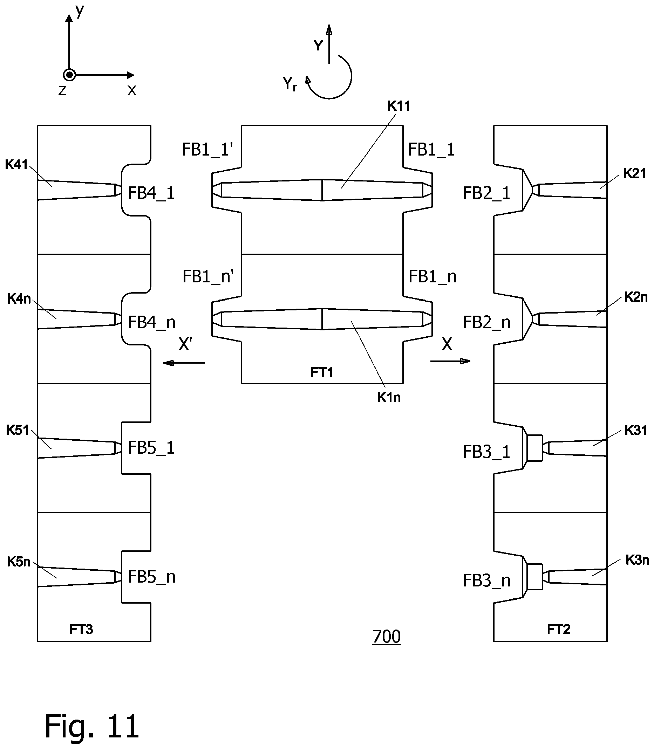

Figur 11 zeigt eine Spritzgießvorrichtung 700, bei der das erste Formteil FT1 an gegenüberliegenden Seiten Formbereiche aufweist, die jeweils in y-Richtung n-fach wiederholt übereinander liegen (mit n = 2 im dargestellten Beispiel). Dies ergibt die Formbereiche FB1_1, ... FB1_n auf der in der Figur rechten Seite und spiegelbildlich dazu die Formbereiche FB1_1', ... FB1_n' auf der linken Seite. Im dargestellten Beispiel führt zu allen genannten Formbereichen ein eigener Spritzgutkanal (K11, K1n). Des Weiteren ist das erste Formteil FT1 in einer Richtung ±Y (parallel zur y-Achse des dargestellten Koordinatensystems) beweglich sowie zusätzlich in einer Drehrichtung Yᵣ drehbar. Die Drehrichtung Yᵣ entspricht dabei einer Drehung um die y-Achse.

Ein zweites Formteil FT2 und ein drittes Formteil FT3 sind den beiden genannten Seiten des ersten Formteils FT1 gegenüberliegend angeordnet. Das zweite Formteil FT2 hat n übereinander liegende (zweite) Formbereiche FB2_1, ... FB2_n sowie weitere n übereinander liegende (dritte) Formbereiche FB3_1, ... FB3_n.

Analog hat das dritte Formteil FT3 n übereinander liegende (vierte) Formbereiche FB4_1, ... FB4_n sowie weitere n übereinander liegende (fünfte) Formbereiche FB5_1, ... FB5_n.

Ein vollständiger Produktionszyklus mit der Spritzgießvorrichtung 700 kann typischerweise wie folgt verlaufen:

### Erster Schritt:

Ausgehend vom in Figur 11 dargestellten Zustand werden das zweite und dritte Formteil FT2, FT3 entgegen den zugehörigen Formöffnungsrichtungen X bzw. X' bewegt, um die Vorrichtung zu schließen. Dadurch bilden die folgenden Formbereiche miteinander Kavitäten:
- Auf der rechten Seite: FB1_1 und FB2_1, ... FB1_n und FB2_n. Diese n Kavitäten seien anfänglich leer. In ihnen kann dann jeweils ein erstes Produktteil P1 (nicht dargestellt) gespritzt werden.
- Auf der linken Seite: FB1_1' und FB4_1, ... FB1_n' und FB4_n. In diesen Kavitäten befindet sich typischerweise bereits ein Vorprodukt (s. "Dritter Schritt"), an das weiteres Material angespritzt werden kann.

### Zweiter Schritt:

Das zweite und dritte Formteil FT2, FT3 werden in den zugehörigen Formöffnungsrichtungen X bzw. X' bewegt, um die Vorrichtung zu öffnen. Anschließend wird das erste Formteil FT1 in (-Y) Richtung, d. h. abwärts senkrecht zu den Formöffnungsrichtungen, bewegt, bis es den unteren Formbereichen gegenübersteht. Die vorgefertigten Produktteile werden dabei vom ersten Formteil FT1 mitgenommen. Dann werden das zweite und dritte Formteil FT2, FT3 entgegen den zugehörigen Formöffnungsrichtungen X bzw. X' bewegt, um die Vorrichtung zu schließen. Dadurch bilden die folgenden Formbereiche miteinander Kavitäten:
- Auf der rechten Seite: FB1_1 und FB3_1, ... FB1_n und FB3_n. In diese n Kavitäten wird dann an das darin liegende erste Produktteil P1 ein zweites Produktteil P2 (nicht dargestellt) angespritzt.
- Auf der linken Seite: FB1_1' und FB5_1, ... FB1_n' und FB5_n. In diesen Kavitäten wird an das darin befindliche Vorprodukt (s. 'Vierter Schritt") weiteres Material angespritzt.

### Dritter Schritt:

Das zweite und dritte Formteil FT2, FT3 werden in den zugehörigen Formöffnungsrichtungen X bzw. X' bewegt, um die Vorrichtung zu öffnen. Anschließend wird das erste Formteil FT1 um 180° in Drehrichtung (Yᵣ) gedreht, so dass die in der Figur anfänglich linken Formbereiche FB1 _1', ... FB1_n' auf der rechten Seite zu liegen kommen und die anfänglich rechten Formbereiche FB1_1, ... FB1_n auf der linken Seite zu liegen kommen. Weiterhin wird das erste Formteil FT1 in (+Y) Richtung wieder nach oben bewegt, bis es den oberen Formbereichen der Formteile FT2, FT3 gegenübersteht. Die vorgefertigten Produktteile werden dabei vom ersten Formteil FT1 mitgenommen. Dann werden das zweite und dritte Formteil FT2, FT3 entgegen den zugehörigen Formöffnungsrichtungen X bzw. X' bewegt, um die Vorrichtung zu schließen. Dadurch bilden die folgenden Formbereiche miteinander Kavitäten:
- Auf der rechten Seite: FB1_1' und FB2_1, ... FB1_n' und FB2_n. Wie im ersten Schritt sind diese Kavitäten anfänglich leer, und in ihnen kann wieder ein erstes Produktteil P1 (nicht dargestellt) gespritzt werden.
- Auf der linken Seite: FB1_1 und FB4_1, ... FB1_n und FB4_n. In diesen Kavitäten wird an das darin befindliche Vorprodukt, das aus dem ersten und zweiten Produktteil P1+P2 besteht, ein drittes Produktteil P3 angespritzt.

### Vierter Schritt:

Das zweite und dritte Formteil FT2, FT3 werden in den zugehörigen Formöffnungsrichtungen X bzw. X' bewegt, um die Vorrichtung zu öffnen. Anschließend wird das erste Formteil FT1 in (-Y) Richtung bewegt, bis es den unteren Formbereichen gegenübersteht. Die vorgefertigten Produktteile werden dabei vom ersten Formteil FT1 mitgenommen. Dann werden das zweite und dritte Formteil FT2, FT3 entgegen den zugehörigen Formöffnungsrichtungen X bzw. X' bewegt, um die Vorrichtung zu schließen. Dadurch bilden die folgenden Formbereiche miteinander Kavitäten:
- Auf der rechten Seite: FB1_1' und FB3_1, ... FB1_n' und FB3_n. Wie im zweiten Schritt wird in diese Kavitäten an das darin liegende erste Produktteil P1 ein zweites Produktteil P2 angespritzt.
- Auf der linken Seite: FB1_1 und FB5_1, ... FB1_n und FB5_n. In diesen Kavitäten wird an das darin befindliche Vorprodukt, das aus dem ersten, zweiten, und dritten Produktteil P1+P2+P3 besteht, ein viertes Produktteil P4 angespritzt. Damit ist gleichzeitig das Endprodukt P fertig.

### Fünfter Schritt:

Das zweite und dritte Formteil FT2, FT3 werden in den zugehörigen Formöffnungsrichtungen X bzw. X' bewegt, um die Vorrichtung zu öffnen. Anschließend wird das erste Formteil FT1 um 180° in Drehrichtung (Yᵣ) gedreht, so dass seine Seiten wieder in die Lage vom Ersten Schritt kommen. Weiterhin wird das erste Formteil FT1 in (+Y) Richtung wieder nach oben bewegt, bis es den oberen Formbereichen der Formteile FT2, FT3 gegenübersteht. Die vorgefertigten Zwischen-Produktteile werden dabei vom ersten Formteil FT1 mitgenommen. Das Endprodukt P wird dagegen der Spritzgießvorrichtung 700 entnommen.

Der Produktionszyklus ist damit abgeschlossen, und ein neuer Zyklus kann beginnen.

In jedem der oben erläuterten Schritte kann dem Vorprodukt ein anderes Spritzgut (unter Verwendung eines anderen Spritzgutkanals) hinzugefügt werden, so dass ein Vier-Komponenten Produkt resultieren würde. Optional können dabei in einem der Schritte auch zwei verschieden Materialien gleichzeitig (über Spritzgutkanäle aus dem ersten Formteil FT und dem zweiten oder dritten Formteil FT2 bzw. FT3) zugeführt werden, um im Ergebnis ein Fünf-Komponenten Produkt zu erzeugen.

In jedem der beschriebenen Produktionszyklen können 2n Endprodukte P hergestellt werden. Optional könnte die Vorrichtung analog zu Figur 6 und 7 auch in z-Richtung m-fach wiederholte Formbereiche aufweisen, um den Produktionsausstoß auf 2n·m zu erhöhen.

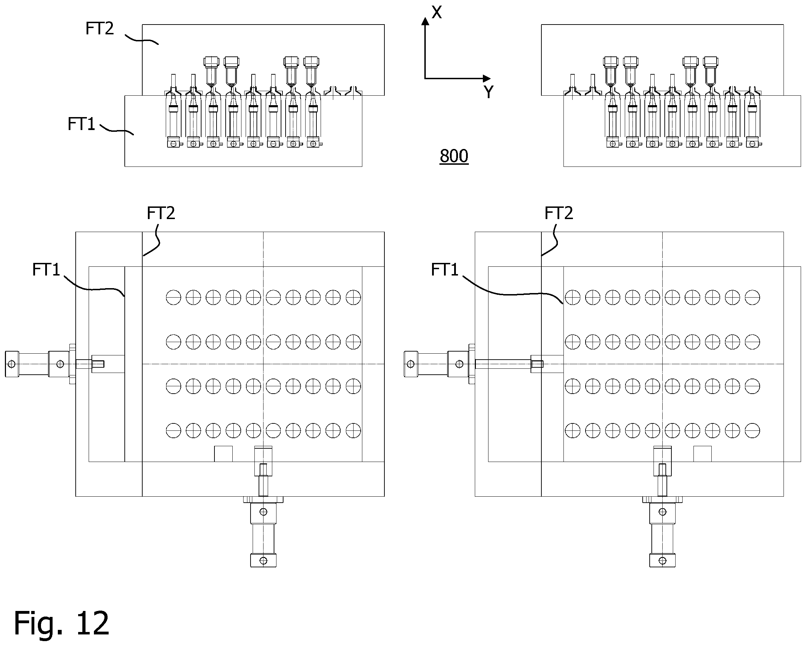

Figur 12 zeigt eine Aufsicht (unten) und einen Schnitt (oben) durch die Konstruktionszeichnung einer realen Spritzgießvorrichtung 800 in den zwei verwendeten Arbeitsstellungen (linke Abbildungen, rechte Abbildungen). Die Vorrichtung ist im Prinzip ähnlich wie die von Figur 6 aufgebaut, wobei durch mehrfaches Abwechseln der zwei Formbereiche des zweiten Formteils FT2 die relative Anzahl der pro Spritzvorgang ungepaarten Formbereiche verringert werden kann.

Allgemein ausgedrückt gibt es bei dieser Ausführungsform an einem der Formteile (2n+1) alternierend angeordnete Formbereiche (oder Blöcke von m gleichen Formbereichen, wobei n, m natürliche Zahlen sind), z. B.

FB2-**FB3**-FB2-**FB3-**... FB2-**FB3**-FB2,

denen am anderen Formteil 2n komplementäre Formbereiche (oder Blöcke von m komplementären Formbereichen) gegenüberstehen, also z. B.

FB1-FB1-FB1-FB1-...FB1-FB1.

Bei jeder Hin und Her Bewegung der Formteile (in Y-Richtung) bilden jeweils n Formbereiche (oder n·m Formbereiche im Falle der Blöcke) eine Kavität

"FB1+FB2"

und weitere n Formbereiche (oder n·m Formbereiche im Falle der Blöcke) eine Kavität

"FB1+**FB3**".

Insgesamt werden in jedem Zyklus so n Kavitäten gebildet, und nur ein Formbereich bleibt ungenutzt.

Natürlich können die Ausführungsformen der Figuren 1 bis 10 auf verschiedene Weise miteinander kombiniert werden. Für einen besonders hohen Produktionsausstoß könnten beispielsweise die Ausführungsformen der Figuren 7 und 9 kombiniert werden.

Weiterhin sei darauf hingewiesen, dass an den dargestellten Spritzgutkanälen (K1, K2, K11, K1n, K21, K2n, K31, K3n, K41, K4n, K51, K5n, K5) typischerweise Mittel zur Kontrolle wichtiger Parameter (Druck, Temperatur etc.) angeordnet sind, die in den vereinfachten Figuren nicht separat dargestellt sind. Insbesondere kann eine Temperiereinheit vorgesehen sein, mit der die Temperatur des Spritzgutes im Spritzgutkanal in einem vorgegebenen Soll-Intervall (bzw. auf einer Sollkurve) gehalten wird. Wenn Spritzgut verarbeitet wird, das bei höheren Temperaturen flüssig wird, enthält eine solche Temperiereinheit typischerweise eine Heizung.

Für Spritzgut (z.B. Flüssigsilikonkautschuk LSR), das bis zum Eintritt in die Kavität kalt gehalten werden muss, um flüssig zu bleiben, enthält die Temperiereinheit typischerweise eine Kühlung. Das Formteil wird in diesen Fällen beheizt, um die Verfestigung des Spritzgutes zu erreichen (z. B. durch Vulkanisieren). Mit der vorliegenden Erfindung ergibt sich eine hervorragende Möglichkeit, solche Materialien mit herkömmlichen Thermoplasten zu verbinden, da die thermische Trennung weitaus einfacher ist und nicht sowohl gekühlte als auch beheizte Kanäle im selben Formteil untergebracht werden müssen.

Zusammenfassend offenbart die Erfindung unter anderem eine Spritzgießvorrichtung und ein Spritzgießverfahren, bei welchen ein erstes Formteil mit einem Spritzgutkanal und ein zweites Formteil (das vorzugsweise ebenfalls einen Spritzgutkanal haben kann) gemeinsam eine erste Kavität bilden, in der ein erstes Produktteil gespritzt werden kann. Weiterhin kann das erste Formteil in einer anderen Richtung als der Formöffnungsrichtung bewegt werden. Auf diese Weise können insbesondere 2-Komponenten Produkte hergestellt werden, indem das erste Formteil mit dem ersten Produktteil zu einem dritten Formbereich bewegt wird, mit dem eine zweite Kavität zur Einspritzung eines weiteren Spritzgutes gebildet wird. Durch eine geeignete Anordnung von Formbereichen und Spritzgutkanälen können weiterhin auch Produkte mit drei oder mehr Komponenten hergestellt werden.

## Patentansprüche

1. Spritzgießverfahren, enthaltend die Schritte:
- ein erstes Produktteil (P1) wird in der Kavität zwischen einem ersten Paar von Formbereichen (FB1, FB1_1, FB1_n, FB2, FB2_1, FB2_n) eines ersten Formteiles (FT1) und eines zweiten Formteiles (FT2) gespritzt, wobei das erste Formteil (FT1) einen in Formöffnungsrichtung verlaufenden Spritzgutkanal (K1, K11, K1n) enthält und wobei das zweite Formteil (FT2) einen Spritzgutkanal (K2, K21, K2n) enthält;
- das erste Formteil (FT1) und das zweite Formteil (FT2) werden in der Formöffnungsrichtung (X) auseinander bewegt;
- das erste Formteil (FT1) wird in einer anderen Richtung (Y, Yᵣ) als der Formöffnungsrichtung (X) bewegt, wobei diese Bewegung zumindest teilweise eine gerade Bewegung ist;
- das erste Formteil (FT1) wird mit dem zweiten Formteil (FT2) oder einem dritten Formteil (FT3) zusammengefügt, so dass ein zweites Paar von Formbereichen (FB1, FB1_1, FB1_n, FB3, FB3_1, FB3_n) des ersten Formteiles (FT1) und zweiten oder dritten Formteiles (FT2, FT3) eine zweite Kavität bildet, in der das erste Produktteil (P1) liegt;
- in der zweiten Kavität wird ein zweites Produktteil (P2) an das erste Produktteil (P1) gespritzt, wobei Spritzgut beim zweiten Spritzvorgang über einen anderen Spritzgutkanal zugeführt wird als das Spritzgut beim ersten Spritzvorgang,
**dadurch gekennzeichnet, dass**
das erste Formteil eine Heizung umfasst, mit der die Temperatur des Spritzgutes im Spritzgutkanal in einem vorgegebenen Soll-Intervall und/oder auf einer Sollkurve gehalten wird.

2. Spritzgießvorrichtung (100-800), enthaltend:
- ein erstes Formteil (FT1) mit einem in Formöffnungsrichtung verlaufenden Spritzgutkanal (K1, K11, K1n);
- ein zweites Formteil (FT2) mit einem Spritzgutkanal (K2, K21, K2n);
wobei
- die beiden Formteile (FT1, FT2) in der Formöffnungsrichtung (X) auseinander bewegt werden können;
- das erste Formteil (FT1) in einer anderen Richtung (Y, Yᵣ) als der Formöffnungsrichtung (X) bewegt werden kann, wobei diese Bewegung zumindest teilweise eine gerade Bewegung ist,
- die Spritzgießvorrichtung (100-800) für die Ausführung eines Verfahrens nach Anspruch 1 eingerichtet ist,
**dadurch gekennzeichnet, dass** das erste Formteil eine Heizung umfasst, mit der die Temperatur des Spritzgutes im Spritzgutkanal in einem vorgegebenen Soll-Intervall und/oder auf einer Sollkurve gehalten werden kann.

3. Spritzgießvorrichtung (100-800) nach Anspruch 2,
**dadurch gekennzeichnet, dass** das erste Formteil (FT1) einen ersten Formbereich (FB1, FB1_1, FB1_n) und das zweite Formteil (FT2) einen zweiten Formbereich (FB2, FB2_1, FB2_n) hat, die im zusammengefügten Zustand der Formteile (FT1, FT2) eine erste Kavität bilden, in welcher ein erstes Produktteil (P1) gespritzt werden kann.

4. Spritzgießvorrichtung (100-800) nach Anspruch 3,
**dadurch gekennzeichnet, dass** ein dritter Formbereich (FB3, FB3_1, FB3_n) vorhanden ist, welcher mit dem ersten Formbereich (FB1, FB1_1, FB1_n) des ersten Formteiles (FT1) oder dem zweiten Formbereich (FB2, FB2_1, FB2_n) des zweiten Formteiles (FT2) im zusammengefügten Zustand eine zweite Kavität bildet, in welcher ein zweites Produktteil (P2) an das erste Produktteil (P1) gespritzt werden kann.

5. Spritzgießvorrichtung (100-800) nach Anspruch 4,
**dadurch gekennzeichnet, dass** der dritte Formbereich (FB3, FB3_1, FB3_n) am ersten Formteil (FT1), am zweiten Formteil (FT2), oder an einem dritten Formteil (FT3) ausgebildet ist.

6. Spritzgießverfahren oder Spritzgießvorrichtung (400, 600) nach mindestens einem der vorhergehenden Ansprüche,
**dadurch gekennzeichnet, dass** ein zusätzlicher Formbereich (FB1_1', FB1_n', FB5) vorgesehen ist, welcher mit einem Formbereich (FB2_1, FB2_n, FB3_1, FB3_n, FB4, FB6) des ersten, zweiten, oder dritten Formteils (FT1, FT2, FT3) zusammengefügt werden kann.

7. Spritzgießverfahren oder Spritzgießvorrichtung (400) nach Anspruch 6,
**dadurch gekennzeichnet, dass** der zusätzliche Formbereich (FB1_1', FB1_n') am ersten Formteil (FT1) vorgesehen ist.

8. Spritzgießverfahren oder Spritzgießvorrichtung (600) nach Anspruch 6,
**dadurch gekennzeichnet, dass** der zusätzliche Formbereich (FB5) an einem zusätzlichen Formteil (FT5) vorgesehen ist.

9. Spritzgießverfahren oder Spritzgießvorrichtung (300, 400, 700, 800) nach mindestens einem der vorhergehenden Ansprüche,
**dadurch gekennzeichnet, dass** Formbereiche (FB1_1, FB1_n, FB2_1, FB2_n, FB3_1, FB3_n, FB1_1", FB1_1n', FB1_11, ... FB1_nm, FB2_11, ... FB2_nm, FB3_11, ... FB3_nm), die miteinander eine Kavität bilden können, jeweils mehrfach vorgesehen sind.

10. Spritzgießverfahren oder Spritzgießvorrichtung (400) nach mindestens einem der vorhergehenden Ansprüche,
**dadurch gekennzeichnet, dass** die Bewegung des ersten Formteiles (FT1) in der anderen Richtung (Y, Yᵣ) als der Formöffnungsrichtung (X) zu einer Rotation um eine Achse und/oder einer spiralförmigen Bewegung gehört.

## Claims

1. Injection moulding method, comprising the steps:
- injecting a first product part (P1) in the cavity between a first pair of mould sections (FB1, FB1_1, FB1_n, FB2, FB2_1, FB2_n) of a first mould part (FT1) and a second mould part (FT2), wherein the first mould part (FT1) contains an injection material channel (K1, K11, K1n) running in the mould opening direction and wherein the second mould part (FT2) contains an injection material channel (K2, K21, K2n);
- moving the first mould part (FT1) and the second mould part (FT2) apart in the mould opening direction (X);
- moving the first mould part (FT1) in another direction (Y, Yᵣ) than the mould opening direction (X), wherein this movement is at least partially a straight movement;
- joining the first mould part (FT1) with the second mould part (FT2) or a third mould part (FT3), so that a second pair of mould sections (FB1, FB1_1, FB1_n, FB3, FB3_1, FB3_n) of the first mould part (FT1) and second or third mould part (FT2, FT3) form a second cavity, in which the first product part (P1) is situated;
- injection-moulding a second product part (P2) in the second cavity (P2) to the first product part (P1), wherein injection material in the second injection process is supplied via another injection material channel than the injection material in the first injection process,
**characterized in that**
the first mould part includes a heating keeping the temperature of the injection material in the injection material channel in a predetermined interval and/or on a defined graph.

2. Injection moulding device (100-800), comprising:
- a first mould part (FT1) with an injection material channel (K1, K11, K1n) running in the mould opening direction;
- a second mould part (FT2) with an injection material channel (K2, K21, K2n);
wherein
- the two mould parts (FT1, FT2) can be moved apart in the mould opening direction (X);
- the first mould part (FT1) can be moved in another direction (Y, Yᵣ) than the mould opening direction (X), wherein this movement is at least partially a straight movement,
- the injection moulding device (100-800) is configured to perform a procedure according to claim 1,
**characterized in that** the first mould part includes a heating in order to keep the temperature of the injection material in the injection material channel in a predetermined interval and/or on a defined graph.

3. Injection moulding device (100-800) according to claim 2, **characterized in that** the first mould part (FT1) has a first mould section (FB1, FB1_1, FB1_n) and the second mould part (FT2) has a second mould section (FB2, FB2_1, FB2_n), which in the joined state of the mould parts (FT1, FT2) form a first cavity in which a first product part (P1) can be injected.

4. Injection moulding device (100-800) according to claim 3, **characterized by** a third mould section (FB3, FB3_1, FB3_n), which together with the first mould section (FB1, FB1_1, FB1_n) of the first mould part (FT1) or the second mould section (FB2, FB2_1, FB2_n) of the second mould part (FT2) in the joined state forms a second cavity in which a second product part (P2) can be injected to the first product part (P1).

5. Injection moulding device (100-800) according to claim 4, **characterized in that** the third mould section (FB3, FB3_1, FB3_n) is formed on the first mould part (FT1), on the second mould part (FT2), or on a third mould part (FT3).

6. Injection moulding method or injection moulding device (400, 600) according to at least one of the preceding claims,
**characterized in that** a further mould section (FB1_1', FB1_n', FB5) is provided, which can be joined with a mould section (FB2_1, FB2_n, FB3_1, FB3_n, FB4, FB6) of the first, second or third mould part (FT1, FT2, FT3).

7. Injection moulding method or injection moulding device (400) according to claim 6,
**characterized in that** the further mould section (FB1_1', FB1_n') is provided on the first mould part (FT1).

8. Injection moulding method or injection moulding device (600) according to claim 6,
**characterized in that** the further mould section (FB5) is provided on a further mould part (FT5).

9. Injection moulding method or injection moulding device (300, 400, 700, 800) according to at least one of the preceding claims,
**characterized in that** multiple of those ones of the mould sections (FB1_1, FB1_n, FB2_1, FB2_n, FB3_1, FB3_n, FB1_1', FB1_1n', FB1_11, ... FB1_nm, FB2_11, ... FB2_nm, FB3_11, .., FB3_nm) are provided, that are capable of forming a cavity with each other.

10. Injection moulding method or injection moulding device (400) according to at least one of the preceding claims,
**characterized in that** the movement of the first mould part (FT1) in the other direction (Y, Yᵣ) than the mould opening direction (X) is part of a rotation about an axis and/or a spiral shaped movement.

## Revendications

1. Procédé de moulage par injection, contenant les étapes:
- une première pièce de produit (P1) est injectée dans la cavité entre une première paire de sections de moulage (FB1, FB1_1, FB1_n, FB2, FB2_1, FB2_n) d'une première part de moulage (FT1) et d'une deuxième part de moulage (FT2), selon lequel la première part de moulage (FT1) contient un canal de matériau d'injection (K1, K11, K1n) allant en direction de l'ouverture du moule et selon lequel la deuxième part de moulage (FT2) contient un canal de matériau d'injection (K2, K21, K2n);
- la première part de moulage (FT1) et la deuxième part de moulage (FT2) sont éloignées l'une de l'autre en la direction de l'ouverture du moule (X);
- la première part de moulage (FT1) est bougée dans une autre direction (Y, Yr) que la direction de l'ouverture du moule (X), selon lequel ce mouvement est au moins partiellement un mouvement droit;
- la première part de moulage (FT1) est assemblée avec la deuxième part de moulage (FT2) ou une troisième part de moulage (FT3), de telle sorte qu'une deuxième paire de sections de moulage (FB1, FB1_1, FB1_n, FB3, FB3_1, FB3_n) de la première part de moulage (FT1) et de la deuxième ou troisième part de moulage (FT2, FT3) forme une deuxième cavité, dans laquelle est située la première pièce de produit (P1);
- dans la deuxième cavité une deuxième pièce de produit (P2) est moulée par injection à la première pièce de produit (P1), selon lequel le matériau d'injection pendant le deuxième procédé d'injection est alimenté par un autre canal de matériau d'injection que le matériau d'injection pendant le premier procédé d'injection,
**caractérisé en ce que**
la première part de moulage comprend un chauffage, avec lequel la température du matériau d'injection dans le canal de matériau d'injection est maintenue dans un intervalle prédéterminé et/ou sur une courbe définie.

2. Dispositif de moulage par injection (100-800), contenant:
- une première part de moulage (FT1) avec un canal de matériau d'injection (K1, K11, K1n) allant en direction de l'ouverture du moule
- une deuxième part de moulage (FT2) avec un canal de matériau d'injection (K2, K21, K2n);
selon lequel
- les deux parts de moulage (FT1, FT2) peuvent s'écarter en la direction de l'ouverture du moule (X);
- la première part de moulage (FT1) peut être bougée dans une autre direction (Y, Yᵣ) que la direction de l'ouverture du moule (X), selon lequel ce mouvement est au moins partiellement un mouvement droit,
- le dispositif de moulage par injection (100-800) est équipé pour l'exécution d'un procédé selon la revendication 1,
**caractérisé en ce que** la première part de moulage comprend un chauffage, avec lequel la température du matériau d'injection dans le canal de matériau d'injection peut être maintenue dans un intervalle prédéterminé et/ou sur une courbe définie.

3. Dispositif de moulage par injection (100-800) selon la revendication 2, **caractérisé en ce que** la première part de moulage (FT1) a une première section de moulage (FB1, FB1_1, FB1_n) et la deuxième part de moulage (FT2) a une deuxième section de moulage (FB2, FB2_1, FB2_n), qui forment à l'état assemblé des parts de moulage (FT1, FT2) une première cavité, dans laquelle une première pièce de produit (P1) peut être injectée.

4. Dispositif de moulage par injection (100-800) selon la revendication 3, **caractérisé en ce qu'**une troisième section de moulage (FB3, FB3_1, FB3_n) existe, qui avec la première section de moulage (FB1, FB1_1, FB1_n) de la première part de moulage (FT1) ou la deuxième section de moulage (FB2, FB2_1, FB2_n) de la deuxième part de moulage (FT2) forme à l'état assemblé une deuxième cavité, dans laquelle une deuxième pièce de produit (P2) peut être moulée à la première pièce de produit (P1).

5. Dispositif de moulage par injection (100-800) selon la revendication 4, **caractérisé en ce que** la troisième section de moulage (FB3, FB3_1, FB3_n) est formée à la première part de moulage (FT1), à la deuxième part de moulage (FT2), ou à une troisième part de moulage (FT3).

6. Procédé de moulage par injection ou dispositif de moulage par
injection (400, 600) selon au moins l'une quelconque des revendications précédentes,
**caractérisé en ce que** une section de moulage supplémentaire (FB1_1', FB1_n', FB5) est prévue, qui peut être assemblée avec une section de moulage (FB2_1, FB2_n, FB3_1, FB3_n, FB4, FB6) de la première, de la deuxième ou de la troisième part de moulage (FT1, FT2, FT3).

7. Procédé de moulage par injection ou dispositif de moulage par
injection (400) selon la revendication 6, **caractérisé en ce que** la section de moulage supplémentaire (FB1_1', FB1_n') est prévue à la première part de moulage (FT1).

8. Procédé de moulage par injection ou dispositif de moulage par
injection (600) selon la revendication 6, **caractérisé en ce que** la section de moulage supplémentaire (FB5) est prévue à une part de moulage supplémentaire (FT5).

9. Procédé de moulage par injection ou dispositif de moulage par
injection (300, 400, 700, 800) selon au moins l'une quelconque des revendications précédentes,
**caractérisé en ce que** celles de sections de moulage (FB1_1, FB1_n, FB2_1, FB2_n, FB3_1, FB3_n, FB1_1', FB1_1n', FB1_11, ... FB1_nm, FB2_11, ... FB2_nm, FB3_11, .., FB3_nm) qui peuvent former une cavité ensemble, sont prévues plusieurs fois.

10. Procédé de moulage par injection ou dispositif de moulage par
injection (400) selon au moins l'une quelconque des revendications précédentes,
**caractérisé en ce que** le mouvement de la première part de moulage (FT1) dans l'autre direction (Y, Yᵣ) que la direction de l'ouverture du moule (X) fait partie d'une rotation autour d'un axe et/ou d'un mouvement en spirale.
